# EUROPEAN PATENT SPECIFICATION

(11) **EP 1 480 417 B1**
(45) Date of publication and mention of the grant of the patent: **19.07.2006**
(21) Application number: 03011566.1
(22) Date of filing: 21.05.2003
(51) Int. Cl.: H04M 1/02, G06F 1/16

(54) **Clamshell-type mobile terminal with flexible display**
Klappbares mobiles Endgerät mit einer flexibler Anzeigeeinheit
Terminal mobile pliable avec afficheur flexible

(43) Date of publication of application: 24.11.2004
(73) Proprietor: Sony Ericsson Mobile Communications AB, 221 88 Lund (SE)
(72) Inventor: Maletz, Thomas, Sony Ericsson Mobile Com. Int. AB, 85609 Aschheim-Dornach (DE)
(74) Representative: Körber, Martin Hans

(56) References cited:
- WO-A-02/47363
- US-A1- 2001 003 450
- US-A1- 2002 054 030
- US-B1- 6 377 324
- US-B1- 6 549 789

## Description

The present invention relates to a clamshell-type mobile terminal for a wireless communication system, such as the GSM or the UMTS system or any other wireless communication system for the communication between mobile terminals and base stations or between mobile terminals.

A clamshell-type mobile terminal typically comprises a lower casing and an upper casing which are connected by a hinge means. The hinge means allows a rotational movement of the lower casing and the upper casing in respect to each other so that the lower casing and the upper casing can be folded onto each other into a closed state and opened into an open state. In the open state, the lower casing and the upper casing include an angle of about 150° to 180° so that the opened mobile terminal can be comfortably held in a user's hand while being operated. In the open state, the inner sides of the lower and the upper casing are exposed to the user. The inner side of the upper casing typically comprises a display for displaying information to a user and the inner side of the lower casing typically comprises a keypad and/or other input means enabling a user to input information and instructions into the mobile terminal. Further, the lower casing typically comprises a microphone for receiving acoustic signals and the upper casing typically comprises a loudspeaker for outputting acoustic signals to a user.

In the closed state of the clamshell-type mobile terminal, the display on the inner side of the upper casing is not visible when the terminal is in the closed state. Some of the recent models of clamshell-type mobile terminals comprise a second display on the outer side of the upper casing for displaying information when the mobile terminal is in its closed state. The second display is usually smaller than the first display and serves to display caller information, i.e. the number and the name of a calling party or the text of an incoming SMS or the like. The necessity to provide two displays with the corresponding supporting means for driving and controlling the two different displays renders the construction of the mobile terminal complex and expensive.

In US 6 549 789 B1 a clamshell-type mobile communication device is disclosed having three or four user interfaces (including active and passive components such as keyboard, display, speaker, microphone, camera, buttons, Braille output device), each disposed on one of the four sides of the housing, i.e. the inner and outer sides of the lower and upper casings. In addition to the above described clamshell characteristic open/close folding movement, the two casing members can be twisted against each other resulting in four closed positions with different interfaces accessible to the user and, by opening the phone for less then 180 degrees, four open positions, having different combinations of interfaces facing the user. By twisting the casing members, which is possible only in an open or nearly open position, a (potential) inner side becomes a (potential) outer side and vice versa. By virtue of detectors signalling the current configuration of the casing members to a central microprocessor a single display can show information specific to the mode of operation corresponding to the current configuration of the casing members. This could be used to display caller information or a SMS or the like when the phone is in a closed position and displaying general information when the phone is in a open state with a keyboard and the display facing the user. But, because changing between the two modes of operation is achieved only by an intricate movement, combining folding and twisting, it is very doubtful that users accept this type of construction for a common mobile phone (The device of US 6 549 789 B1 is equipped with multiple user interfaces to provide multiple operation modes. It can e.g. be equipped with special interfaces to provide persons with disabilities access to the device and therefore to mobile telecommunication services). Furthermore, to allow for the twist movement an extended or a second hinge means is necessary which is increasing the complexity of construction and decreasing the robustness of the device.

In US 2001/0003450 A1 a telecommunication device is disclosed having a flexible display and a housing defining a space for accommodating the display wherein the user interface has two states and the flexible display adopts a compacted spatial configuration, e.g. a roll, in the first state and an extended spatial configuration, e.g. a plane, in the second state.

The object of the present invention is therefore to provide a clamshell-type mobile terminal for a wireless communication system which can display information on the inner side as well as on the outer side of the upper casing while having a simple construction.

The above object is achieved by a clamshell-type mobile terminal according to claim 1. The clamshell-type mobile terminal according to the present invention comprises a lower casing having an inner side and an outer side, said inner side comprising a key pad with input keys, an upper casing having an inner side and an outer side and comprising a display, and a hinge means connecting the lower and the upper casing so that the lower and the upper casing can be folded onto each other into a closed state and opened into an open state and is characterized in that said display is flexible and in that the mobile terminal further comprises a display moving means for moving at least a part of said flexible display from a first position, in which at least a major part of the display is located and visible on the inner side of the upper casing to a second position, in which a part of said display is located and visible on the outer side of said upper casing.

The provision of a display which is flexible hereby enables the use of only a single display to display information on the inner side as well as on the outer side of the upper casing. Hereby, only the means required to drive and to control the single flexible display are necessary. Since the display is flexible, it can be moved from the first position on the inner side of the upper casing to the second position in which a part of the display is located on the outer side of the upper casing. Most normal displays have the contacts and the wiring on the sides of the display and are often even transparent, so that information can be shown and is visible from both sides of the display. Thus, it would be possible to make a little window on the outer side of the upper casing so that at least a part of the display is visible from both sides. On the other hand, this would means that the space on the backside (outer side) of the display has to be free from any further elements so that this part of the display is visible from the outer side. Usually, on the upper part of a mobile terminal a lot of electronic elements are located, as e.g. the antenna, a camera and so forth, so that the present invention proposes a different solution, namely to move the display from the first position to the second position as claimed. Such moving of a display is only possible if the display is made of a flexible material. Hereby, organic flexible displays are particularly advantageous. Such displays are also known under the name "organic light emitting displays (OLED)".

Advantageously, the moving means moves the display into said first position if the mobile terminal is moved into said open state and into said second position if said mobile terminal is moved into said closed state. Hereby, the movement of the display can be directly coupled to the movement of the display, e.g. via a cogwheel or the like. Alternatively, a detecting means is advantageously provided for detecting if the mobile terminal is in the opened or the closed state, whereby the moving means moves the flexible display depending on the detected state of the mobile terminal. If the user opens the mobile terminal from the closed state into the open state, the display is moved automatically from the second position, in which a part of the display is visible from the outside of the upper casing, to the first position, in which the entire display is visible on the inner side of the upper casing.

Several possibilities can be implemented of how the flexible display is moved between the first and the second position. In a first alternative, the moving means advantageously moves only an upper part of said display from said first position to said second position by folding said upper part of the display away from the inner side to the outer side of the casing. Thus, the lower part of the display, i.e. the part located closer to the hinge means, stays in position and does not move, while only the upper part of the display is folded or bent backwards to be exposed and visible on the outer side of the upper casing. Alternatively, the moving means advantageously comprises a roller means located on one end of the upper casing, whereby the display is moved from said first position to said second position by being wound around and moved by the roller means. The roller means is e.g. a cylindrical element located at the upper end of the upper casing (or the lower end beneath the hinge means). When moved from the first position to the second position the display is wound around the roller means until a part of it is exposed to and visible on the outer side of the casing. In this alternative, the entire display is moving in a sliding movement. This alternative is particularly advantageous since more electronic elements can be located in the upper part of the mobile terminal. The display does not need a lot of space to perform the sliding movement around these electronic elements.

Advantageously, the information displayed on the display in the second position is displayed upside down in relation to the first position.

The present invention is further explained in the following description in relation to the enclosed drawings, in which
Fig. 1 shows a schematic side view of a clamshell-type mobile terminal according to the present invention in its open state,
Fig. 2 shows a schematic side view of a first embodiment of a mobile terminal according to the present invention in its closed state,
Fig. 3 shows a schematic side view of a second embodiment of a mobile terminal according to the present invention in its closed state,
Fig. 4 shows a schematic side view of a fourth embodiment of a mobile terminal according to the present invention in its closed state, and
Fig. 5 shows a schematic block diagram of a mobile terminal according to the present invention.

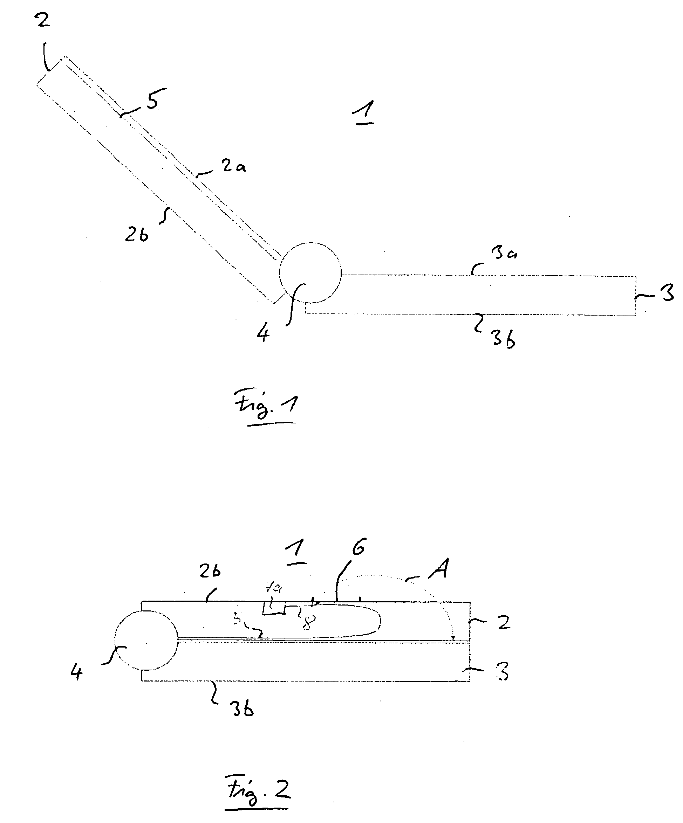

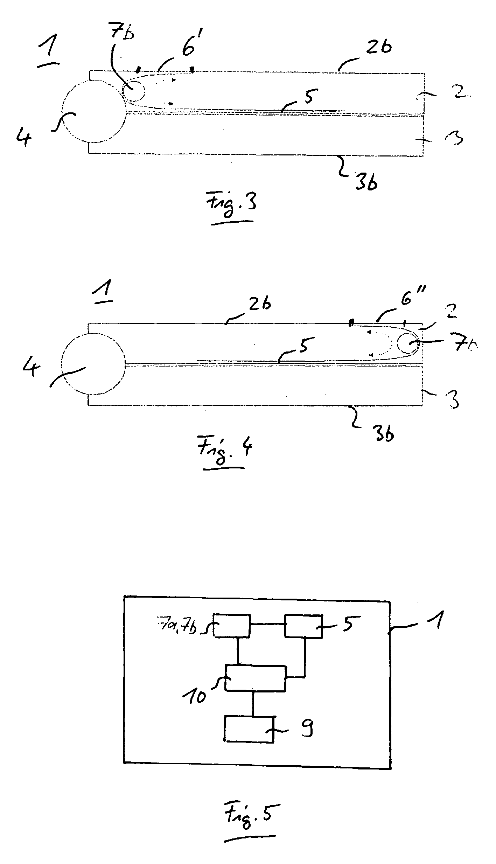

Fig. 1 schematically shows a side view of a mobile terminal 1 of the clamshell-type according to the present invention. Hereby, Fig. 1 shows a general schematic and conceptual view, whereas Figs. 2, 3 and 4 disclose different embodiments thereof. Fig. 5 shows a general schematic block diagram of a mobile terminal 1 according to the present invention.

Generally, the mobile terminal 1 according to the present invention is a clamshell-type mobile terminal, i.e. comprises an upper casing 2 and a lower casing 3 which are movably connected by a hinge means 4. Clamshell-type mobile terminals of this kind and construction are generally known in the art. The upper casing 3 can be folded onto the lower casing 3 so that the mobile terminal 1 is in its closed state, as shown for the embodiments of the Figs. 2, 3 and 4. The inner side 2a of the upper casing 2 comprises and exposes a display 5 under a glass or a transparent plastics material. In the example shown in Fig. 1, the entire inner side 2a is covered by the display 5 in its entire region. Alternatively, the display 5 could only cover a part of the inner side 2a, so that further functional elements, such as input keys, could be comprised on the inner side 2a. The inner side 3a of the lower casing 3 usually comprises a keypad and/or further input keys through which a user can input instructions and information to the mobile terminal 1.

The upper casing 2 further comprises an outer side 2b and the lower casing 3 further comprises an outer side 3b. In the closed state of the mobile terminal 1 as e.g. shown in Figs. 2, 3 and 4, the outer sides 2b and 3b are exposed and visible to a user. According to the present invention, the display 5 is made of a flexible material, such as an organic light emitting material. Hereby, the flexible display 5 can be moved from a first position in the opened state, such as shown in Fig. 1, in which the display is (entirely) located on and visible at least to a major extent from the inner side 2a of the upper casing 2, to a second position, in which a part of said display is located and visible on the outer side 2b of the upper casing 2. Several embodiments of how the display 5 is moved from the first position to the second position and vice versa are shown and explained in relation to Figs. 2, 3 and 4.

Fig. 2 shows a first embodiment of a mobile terminal 1 according to the present invention in its closed state, in which the upper casing 2 is folded onto the lower casing 3. In the closed state, the upper part of the flexible display 5, i.e. the part of the display located at the upper end of the display 2 away from the hinge means 4 is folded backwards to be located and visible on the outer side 2b of the upper casing 2. Hereby, a window 6, e.g. covered with glass or a transparent plastics material is provided, under which the upper part of the flexible display 5 is located in the second position. The lower part of the flexible display 5 which is located on the inner side 2a in the neighbourhood to the hinge means 4 stays in its position and is not moved. Folding the upper part of the flexible display 5 backwards has the advantage, that the side of the flexible display 5 which is used to display information on the inner side 2a of the upper casing 2 is also used to display information under the window 6. Therefore, in the closed state of the mobile terminal 1, information such as caller identification, SMS messages and the like can be displayed by the upper part of the display 5 on the outer side 2b of the mobile terminal 1.

The movement of the flexible display 5 from the first position shown in Fig. 1 to the second position shown in Fig. 2 is controlled and performed by a display moving means 7a. Hereby, the display moving means 7a is e.g. mechanically connected to the upper part of the display means 5 be means of a wire or the like in order to move it between the first and the second position. Alternatively, the display moving means 7a could physically move the upper part of the display means 5 on the basis of magnetic forces or any other suitable way.

Fig. 3 shows a second embodiment of the mobile terminal 1 according to the present invention in its closed state. In the second embodiment shown in Fig. 3, the flexible display means 5 is moved with a gliding or sliding movement from the first position to the second position and vice versa. Hereby, the flexible display 5 is wound around a roller means 7b, e.g. in form of a cylindrical member located on the lower end of the upper casing 2 near the hinge means 4. When the roller means 7b is turned, the flexible display 5 is wound around it until the lower part is located on and visible from the outer side 2b of the upper casing 2. Hereby, a window 6' similar to the window 6 of the first embodiment is provided under which the lower part of the display 5 is located and visible.

In a third embodiment of a mobile terminal shown in Fig. 4, the roller means 7b is located on the upper end of the display means 2. Hereby, when moved from the first position to the second position, a flexible display 5 is wound and moved around the roller means 7b until it is located under a window 6" on the upper side of the outer side 2b of the casing 2. Thus, in the embodiments shown in Figs. 3 and 4, the flexible display means 5 is moved between the first and second position by a sliding movement around the roller means 7b, whereby the entire display 5 is moved. Alternatively, the display can be rolled sideways, i.e. around a roller means located and extending along one of the sides of the upper casing.

Generally, in all embodiment described above, the part of the display which is not visible in the second position is turned off in order to save battery power. Further, the information displayed on the part of the display which is visible in the second position is advantageously rotated by 180° or displayed upside down in relation to the display direction in the first position so that the user does not have to rotate the mobile terminal unnecessarily. The functionality of inverting the display of the information between the first position and the second position could be controlled by the base band processor, e.g. the display driver.

As shown in the schematic block diagram of Fig. 5, the mobile terminal 1 according to the present invention comprises a control means 10, which can be e.g. part of the base band processor of the mobile terminal 1. The control means 10 controls the display 5 for displaying information as well as the display moving means 7a or 7b. Further, a detecting means 9 is provided, which detects the state of the mobile terminal 1. In a first example, the detecting means 9 detects if the mobile terminal 1 is in the opened or the closed state. If the mobile terminal 1 is in its opened state, as e.g. shown in Fig. 1, the flexible display 5 is moved from the second position to the first position. Likewise, when the detecting means 9 detects that the mobile terminal 1 is in its closed state, the flexible display 5 is moved from the first position to the second position as shown in the embodiments of Figs. 2, 3 and 4. Thus, in the first example, the display means 5 is only moved as soon as the mobile terminal 1 reaches the first or second position. In a second example, the detecting means 9 detects if the mobile terminal 1 is starting to be folded from its opened state towards its closed state. As soon as the folding movement from the opened state to the closed state starts, the flexible display 5 is started to be moved from its first position to the second position. When the closed state of the mobile terminal 1 is finally reached, the flexible display is already in the second position. Likewise, if the mobile terminal 1 is started to be unfolded from its closed state, the unfolding movement is detected by the detecting means 9 and the display means 5 is started to be moved from the second position to the first position. When the mobile terminal 1 finally reaches the opened state, the display 5 is already in its first position.

In an alternative to the above-mentioned detection means for detecting the state of the mobile terminal 1, the movement of the display 5 could be directly coupled to the movement of the mobile terminal 1 between the open state and the closed state. E.g., a simple mechanic implementation comprising e.g. a cogwheel connected to the hinge 4 as well as to the display 5 could move the display as soon as the mobile terminal 1 is folded or unfolded.

The movable flexible display according to the present invention has a further advantage when used in combination with a camera on the mobile terminal. Many mobile terminals have a fixedly mounted camera which is positioned on the outer side of the casing of the mobile terminal. Hereby, the user sees the display 5 (in the first position and the unfolded state of the mobile terminal), whereby the camera is on the opposite side of the casing and is able to take a picture and a direction in which the user is looking. If the user wants to take a picture of him- or herself, he or she has to turn around the mobile terminal so that the camera is pointing towards him or her. However, the user cannot see the display 5 any longer and is not able to judge if the camera is properly pointing at him or her. Hereby, using the mobile and flexible display 5 according to the present invention, the flexible display 5 can be moved into the second position when the camera is pointed towards the user so that the user can see on the part of the display which is visible on the outer side of the upper casing if the camera is properly pointed.

It has to be noted, that the Figs. 1 to 5 only show the elements of the mobile terminal 1 necessary for the present invention. In practice, the mobile terminal 1 will comprise all further elements necessary for the communication in a wireless communication system, such as the GSM or the UMTS system, such as transceiver, antenna, base band processor and so forth.

## Claims

1. Clamshell-type mobile terminal (1) for a wireless communication system, with
a lower casing (3) having an inner side and an outer side, said inner side comprising a keypad with input keys,
an upper casing (2) having an inner side and an outer side and comprising a display and
a hinge means (4) connecting the lower (3) and the upper casing (2) so that the lower and the upper casing can be folded onto each other into a closed state and opened into an open state
**characterized in,**
**that** said display is flexible and in that the mobile terminal (1) further comprises a display moving means (7a, 7b) for moving at least a part of said flexible display from a first position, in which at least a major part of the display is located and visible on the inner side of the upper casing to a second position, in which a part of said display is located and visible on the outer side of said upper casing.

2. Clamshell type mobile terminal according to claim 1,
**characterized in,**
**that** said moving means (7a, 7b) moves said display into said first position if the mobile terminal is moved into said opened state and into said second position if said mobile terminal is moved into said closed state.

3. Clamshell type mobile terminal according to claim 2,
**characterized by**
a detecting means (9) for detecting if the mobile terminal is in said opened or said closed state, whereby said moving means moves said flexible display depending on the detected state of the mobile terminal.

4. Clamshell type mobile terminal according to claim 1, 2 or 3,
**characterized in,**
**that** said moving means (7a) moves only an upper part of said display from said first position to said second position by folding said upper part of said display away from said inner side to said outer side.

5. Clamshell type mobile terminal according to claim 1, 2 or 3,
**characterized in,**
**that** said moving means (7b) comprises a roller means located on one end of the upper casing, whereby the display is moved from said first position to said second position by being wound around and moved by said roller means.

6. Clamshell type mobile terminal according to one of the claims 1 to 5,
**characterized in,**
**that** the information displayed on the display in the second position is displayed upside down in relation to the first position

## Patentansprüche

1. Zweischaliges Mobilgerät (1) für ein drahtloses Kommunikationssystem, mit
einem unteren Gehäuse (3) mit einer Innenseite und einer Außenseite, wobei die Innenseite eine Tastatur mit Eingabetasten aufweist,
einem oberen Gehäuse (2) mit einer Innenseite und einer Außenseite und mit einer Anzeige, und
einer Drehgelenkeinrichtung (4), die mit dem unteren und dem oberen Gehäuse (3, 2) verbunden ist, sodass das untere und das obere Gehäuse in einen geschlossenen Zustand aufeinander geklappt und in einen offenen Zustand geöffnet werden können,
**dadurch gekennzeichnet,**
**dass** die Anzeige flexibel ist und dass das Mobilgerät (1) weiter eine Anzeigebewegungseinrichtung (7a, 7b) zum Bewegen wenigstens eines Teils der flexiblen Anzeige von einer ersten Stellung, in welcher wenigstens ein Hauptteil der Anzeige an der Innenseite des oberen Gehäuses positioniert und sichtbar ist, zu einer zweiten Stellung, in welcher ein Teil der Anzeige an der Außenseite des oberen Gehäuses positioniert und sichtbar ist, aufweist.

2. Zweischaliges Mobilgerät nach Anspruch 1,
**dadurch gekennzeichnet,**
**dass** sich die Bewegungseinrichtung (7a, 7b) in die erste Stellung bewegt, wenn das Mobilgerät in den geöffneten Zustand bewegt wird, und in die zweite Stellung, wenn das Mobilgerät in den geschlossenen Zustand bewegt wird.

3. Zweischaliges Mobilgerät nach Anspruch 2,
**gekennzeichnet durch**
eine Erfassungseinrichtung (9) zum Erfassen, ob sich das Mobilgerät in dem geöffneten oder dem geschlossenen Zustand befindet, wobei die Bewegungseinrichtung die flexible Anzeige in Abhängigkeit von dem erfassten Zustand des Mobilgeräts bewegt.

4. Zweischaliges Mobilgerät nach Anspruch 1, 2 oder 3,
**dadurch gekennzeichnet,**
**dass** die Bewegungseinrichtung (7a) nur einen oberen Teil der Anzeige von der ersten Stellung zur zweiten Stellung durch Falten des oberen Teils der Anzeige weg von der Innenseite zur Außenseite bewegt.

5. Zweischaliges Mobilgerät nach Anspruch 1, 2 oder 3,
**dadurch gekennzeichnet,**
**dass** die Bewegungseinrichtung (7b) eine Rolleneinrichtung aufweist, die an einem Ende des oberen Gehäuses angeordnet ist, wobei die Anzeige von der ersten Stellung zur zweiten Stellung bewegt wird, indem sie um die Rolleneinrichtung gewickelt und bewegt wird.

6. Zweischaliges Mobilgerät nach einem der Ansprüche 1 bis 5,
**dadurch gekennzeichnet,**
**dass** die auf der Anzeige in der zweiten Stellung angezeigten Informationen relativ zur ersten Stellung auf dem Kopf angezeigt werden.

## Revendications

1. Terminal mobile de type double coque (1) pour un système de communications sans fil, comportant un corps inférieur (3) présentant une face intérieure et une face extérieure, ladite face intérieure comprenant un clavier avec des touches d'entrée,
un corps supérieur (2) présentant une face intérieure et une face extérieure et comprenant un affichage et un moyen à charnière (4) reliant les corps inférieur (3) et supérieur (2) de sorte que les corps inférieur et supérieur puissent être repliés l'un sur l'autre dans un état fermé et ouverts dans un état ouvert,
**caractérisé en ce que**
ledit affichage est souple et **en ce que** le terminal mobile (1) comprend en outre un moyen de déplacement d'affichage (7a, 7b) destiné à déplacer au moins une partie dudit affichage souple depuis une première position, dans laquelle au moins une majeure partie de l'affichage est située et visible sur la face intérieure du corps supérieur, vers une deuxième position, dans laquelle une partie dudit affichage est située et visible sur la face extérieure dudit corps supérieur.

2. Terminal mobile de type double coque selon la revendication 1,
**caractérisé en ce que** ledit moyen de déplacement (7a, 7b) déplace ledit affichage dans ladite première position si le terminal mobile est déplacé dans ledit état ouvert et dans ladite deuxième position si ledit terminal est déplacé dans ledit état fermé.

3. Terminal mobile de type double coque selon la revendication 2,
**caractérisé par** un moyen de détection (9) destiné à détecter si le terminal mobile est dans ledit état ouvert ou ledit état fermé, moyennant quoi ledit moyen de déplacement déplace ledit affichage souple en fonction de l'état détecté du terminal mobile.

4. Terminal mobile de type double coque selon la revendication 1, 2 ou 3,
**caractérisé en ce que** ledit moyen de déplacement (7a) déplace uniquement une partie supérieure dudit affichage depuis ladite première position vers ladite deuxième position en repliant ladite partie supérieure dudit affichage à l'écart de ladite face intérieure vers ladite face extérieure.

5. Terminal mobile de type double coque selon la revendication 1, 2 ou 3,
**caractérisé en ce que** ledit moyen de déplacement (7b) comprend un moyen à rouleaux situé sur une extrémité du corps supérieur, moyennant quoi l'affichage est déplacé depuis ladite première position vers ladite deuxième position en étant enroulé autour dudit moyen à rouleaux et déplacé par celui-ci.

6. Terminal mobile de type double coque selon l'une des revendications 1 à 5,
**caractérisé en ce que** les informations affichées sur l'affichage dans la deuxième position sont affichées de manière inversée par rapport à la première position.
